# EUROPEAN PATENT APPLICATION

(11) **EP 4 535 860 A1**
(43) Date of publication of application: **09.04.2025**
(21) Application number: 23814681.5
(22) Date of filing: 01.03.2023
(51) Int. Cl.: H04W 28/18, H04L 1/06, H04W 28/20

(54) **CHANNEL PARAMETER DETERMINATION METHOD AND APPARATUS, DEVICE, AND STORAGE MEDIUM**

(30) Priority: 02.06.2022 CN 202210629695
(71) Applicant: TP-Link Systems Inc., Irvine, California 92618 (US)
(72) Inventor: LI, Wanyi, Shenzhen, Guangdong 518000 (CN); TONG, Di, Shenzhen, Guangdong 518000 (CN)
(74) Representative: Zacco GmbH
(86) International application number: PCT/CN2023/079096
(87) International publication number: WO 2023/231482

(57) **Abstract**

The present disclosure discloses a method and apparatus for determining a channel parameter, a device, and a storage medium. The method includes: determining, by a data sending end, a target sending power of a monitoring bandwidth; detecting, by the data sending end, state information of a data receiving end, and then determining, by the data sending end, bandwidths to be selected matching the data receiving end, and obtaining a target SNR of each bandwidth to be selected; performing calculation, by the data sending end, based on the target SNR to obtain a reference MCS set of each bandwidth to be selected; performing calculation, by the data sending end, based on the reference MCS set to obtain a target throughput of each bandwidth to be selected; and determining, by the data sending end, a working throughput based on the target throughput of each bandwidth to be selected, and determining a working bandwidth and a working rate based on the working throughput. The technical solution of the present disclosure may judge the working bandwidth and the corresponding working rate for obtaining the maximum throughput.

## Description

The present disclosure claims the priority of Patent Application 202210629695.4, filed on June, 02, 2022 and entitled "Method and Apparatus for Determining Channel Parameter, Device and Storage Medium", the entire contents of which are herein incorporated by reference.

### Technical Field

The present disclosure belongs to the technical field of data transmission, and in particular to a method and apparatus for determining a channel parameter, a device, and a storage medium.

### Background

Spatial Reuse (SR) specifically refers to an Over Lapping Basis Service Set message Detect Based Spatial Reuse (OBSS PD-based SR) technology disclosed in 802. 11AX, and a basic mechanism thereof is to adjust, upon monitoring a message from an OBSS, its own maximum sending power according to a receiving power of the monitored message of the OBSS, thereby achieving the effect of spatial reuse, achieving the purpose of enabling itself to send the message when other data sending ends send messages, and improving the space utilization rate.

However, based on the 802. 11AX technology, the spatial reuse may be only implemented based on a main channel (20MHz), and the spatial reuse cannot be implemented on other high-bandwidth channels, so that the space utilization rate is relatively low, which is not conducive to data transmission.

### Summary

The present disclosure aims to solve at least one of the technical problems in the related art to a certain extent. To this end, one objective of the present disclosure is to provide a method and apparatus for determining a channel parameter, a device, and a storage medium.

In order to solve the above technical problems, the embodiments of the present disclosure provide the following technical solutions:
A method for determining a channel parameter, including: determining, by a data sending end, a target sending power of a monitoring bandwidth; detecting, by the data sending end, state information of a data receiving end, and then determining, by the data sending end, bandwidths to be selected matching the data receiving end, and obtaining a target SNR of each bandwidth to be selected; performing calculation, by the data sending end, based on the target SNR to obtain a reference MCS set of each bandwidth to be selected; performing calculation, by the data sending end, based on the reference MCS set to obtain a target throughput of each bandwidth to be selected; and determining, by the data sending end, a working throughput based on the target throughput of each bandwidth to be selected, and determining a working bandwidth and a working rate based on the working throughput.

As at least alternative embodiment, determining, by the data sending end, the target sending power of the monitoring bandwidth includes: monitoring, by the data sending end, a message of an OBSS based on a monitoring channel; acquiring, by the data sending end, a bandwidth and a receiving power corresponding to the message based on the message; and performing calculation, by the data sending end, based on the receiving power to obtain the target sending power of the monitoring bandwidth.

As at least alternative embodiment, acquiring, by the data sending end, the bandwidth and the receiving power corresponding to the message based on the message includes: the bandwidth corresponding to the message is greater than or equal to the monitoring bandwidth corresponding to the monitoring channel.

As at least alternative embodiment, detecting, by the data sending end, the state information of the data receiving end, and then determining, by the data sending end, the bandwidths to be selected matching the data receiving end, and obtaining the target SNR of each bandwidth to be selected includes: acquiring, by the data sending end, the length of the message, and comparing the length with a length threshold; when the length is greater than the length threshold, sending, by the data sending end, a CSI detection request to the data receiving end; sending, by the data sending end, a sounding frame to the data receiving end; determining, by the data receiving end, the matched bandwidths to be selected and obtaining an initial SNR of each bandwidth to be selected based on the sounding frame and the target sending power of each bandwidth to be selected; receiving, by the data sending end, the bandwidths to be selected matching the data receiving end and the initial SNR of each bandwidth to be selected, which are fed back by the data receiving end; and performing calculation, by the data sending end, based on the initial SNR to obtain the target SNR.

As at least alternative embodiment, performing calculation, by the data sending end, based on the initial SNR to obtain the target SNR includes: when the monitoring bandwidth of the monitoring channel is a first-type bandwidth, determining the initial SNR as the target SNR of each bandwidth to be selected; and when the monitoring bandwidth of the monitoring channel is a second-type bandwidth, performing calculation based on the initial SNR, the target sending power of the first-type bandwidth and the target sending power of the monitoring channel, so as to obtain the target SNR of each bandwidth to be selected.

As at least alternative embodiment, performing calculation, by the data sending end, based on the target SNR to obtain the reference MCS set of each bandwidth to be selected includes: performing calculation, by the data sending end, based on the target SNR to obtain an MCS threshold of each bandwidth to be selected; and screening a plurality of MCSs corresponding to each bandwidth to be selected based on the MCS threshold, so as to obtain the reference MCS set of each bandwidth to be selected.

As at least alternative embodiment, performing calculation, by the data sending end, based on the reference MCS set to obtain the target throughput of each bandwidth to be selected includes: obtaining, by the data sending end, a plurality of arrays based on the reference MCS set of each bandwidth to be selected and a maintenance parameter, wherein each array includes the bandwidth to be selected, a reference MCS and the number of spatial streams; performing calculation, by the data sending end, based on each array to obtain a rate to be selected; performing calculation, by the data sending end, based on each rate to be selected to obtain a throughput to be selected; and screening, by the data sending end, a plurality of throughputs to be selected of each bandwidth to be selected, so as to determine the target throughput of each bandwidth to be selected.

As at least alternative embodiment, performing calculation, by the data sending end, based on each rate to be selected to obtain the throughput to be selected includes: acquiring, by the data sending end, a packet loss rate of each bandwidth to be selected; and performing calculation, by the data sending end, based on each rate to be selected and the packet loss rate to obtain the throughput to be selected.

As at least alternative embodiment, determining, by the data sending end, the working throughput based on the target throughput of each bandwidth to be selected, and determining the working bandwidth based on the working throughput includes: acquiring, by the data sending end, the target throughput of each bandwidth to be selected; screening, by the data sending end, a plurality of target throughputs to determine the working throughput; respectively determining, by the data sending end, the bandwidth to be selected, the rate to be selected, the reference MCS and the packet loss rate corresponding to the working throughput as the working bandwidth, the working rate, a working MCS and a working packet loss rate; and determining, by the data sending end, a working channel for data transmission based on the working bandwidth, the working rate, the working MCS and the working packet loss rate.

An embodiment of the present disclosure further provides an apparatus for determining a channel parameter, including: a first determination module, configured to determine, by a data sending end, a target sending power of a monitoring bandwidth; a detection module, configured to detect, by the data sending end, state information of a data receiving end, and then configured to determine, by the data sending end, bandwidths to be selected matching the data receiving end, and obtain a target SNR of each bandwidth to be selected; a first calculation module, configured to perform calculation, by the data sending end, based on the target SNR to obtain a reference MCS set of each bandwidth to be selected; a second calculation module, configured to perform calculation, by the data sending end, based on the reference MCS set to obtain a target throughput of each bandwidth to be selected; and a second determination module, configured to determine, by the data sending end, a working throughput based on the target throughput of each bandwidth to be selected, and determine a working bandwidth and a working rate based on the working throughput.

An embodiment of the present disclosure further provides an electronic device, including a processor, a memory, and a computer program, stored in the memory and configured to be executed by the processor, wherein the processor, when executing the computer program, implements the above method.

An embodiment of the present disclosure further provides a computer-readable storage medium, including a computer program stored therein, wherein the computer program, when running, controls a device where the computer-readable storage medium is located to execute the above method.

The embodiments of the present disclosure have the following technical effects:
In the above technical solutions of the present disclosure, 1) based on mechanisms such as CSI detection and CSI reporting, the data sending end may more accurately find, on the basis of the target SNR, an optimal MCS supported by the data receiving end on the bandwidth, thereby avoiding the defect of being necessary to resend data due to the fact that the MCS is limited; and it is also possible to judge to use which bandwidth as the working bandwidth to obtain the maximum throughput, and then the working channel is configured based on the working bandwidth and the corresponding working rate, thereby finally improving the efficiency of data transmission.

2) Spatial reuse under other high bandwidths in addition to the spatial reuse under the main channel 20 MHz may be implemented, thereby expanding the application range of spatial reuse.

3) The channel parameter is determined based on spatial reuse, and regardless of an AP or an STA may very freely use the spatial reuse without performing scheduling and polling in advance, thereby being simple in use, and improving the data transmission efficiency while improving the space utilization rate.

4) When the monitoring bandwidth of the monitoring channel is greater than 20 MHz, the target SNR is obtained by calculation in combination with the initial SNR, the target sending power of the monitoring bandwidth and the target sending power corresponding to 20 MHz, so as to improve the accuracy of the target SNR used by a subsequent algorithm.

Additional aspects and advantages of the present disclosure will be given in part in the following description, become apparent in part from the following description, or be learned from the practice of the present disclosure.

### Brief Description of the Drawings

Fig. 1 is a schematic flowchart of a method for determining a channel parameter provided in an embodiment of the present disclosure;
Fig. 2 is a schematic diagram of obtaining a target sending power of a monitoring bandwidth provided in an embodiment of the present disclosure; and
Fig. 3 is a schematic structural diagram of an apparatus for determining a channel parameter provided in an embodiment of the present disclosure.

### Detailed Description of the Embodiments

Embodiments of the present disclosure will be described in detail below, and examples of the embodiments are shown in the drawings, in which the same or similar reference signs refer to the same or similar elements or elements with the same or similar functions throughout. The embodiments described below with reference to the drawings are exemplary and are intended to explain the present disclosure, but cannot be construed as limiting the present disclosure.

In order to facilitate the understanding of the embodiments by those skilled in the art, some terms are explained below:
(1) STA: Station.
(2) AP: Access Point.
(3) SNR: Signal-to-Noise Ratio.
(4) MCS: Modulation and Coding Scheme.
(5) PPDU: Presentation Protocol Data Unit; and in the embodiments of the present disclosure, a sounding PPDU is a sounding frame.
(6) CSI: Channel State Information.
(7) RXVECTOR: Receiving Vector.

Since different bandwidths correspond to different sending powers and different SNRs, the use of the MCS may be limited, therefore a high throughput does not necessarily correspond to a high bandwidth, and in order to determine the bandwidth with the maximum throughput, the embodiments of the present disclosure provide the following technical solutions:
An embodiment of the present disclosure provides a system for determining a channel parameter, including:
at least one STA and at least one AP;
for example, the STA may serve as a data sending end, the AP may serve as a data receiving end, and the STA and the AP perform data transmission based on any channel.

The STA monitors a message from an OBSS based on a monitoring channel, records the monitored message of the OBSS to obtain a bandwidth and a receiving power corresponding to the message, and then determines the maximum sending power of a monitoring bandwidth corresponding to the monitoring channel according to the recorded bandwidth and the receiving power; and
the STA obtains an environment supported by the AP, including parameters such as the types of bandwidths to be selected and target SNRs, then determines a working parameter, determines a working channel based on the working parameter, and performs data transmission with the AP based on the working channel.

Further, the bandwidths to be selected may be 20 MHz, 40 MHz, 80 MHz, or 160 MHz, etc.

In the embodiment of the present disclosure, a channel parameter is determined based on spatial reuse, and regardless of the AP or the STA may very freely use spatial reuse without performing scheduling and polling in advance, thereby being simple in use, and improving the data transmission efficiency while improving the space utilization rate.

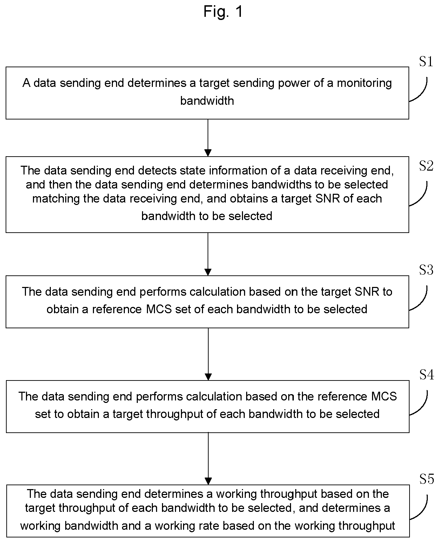

As shown in Fig. 1, an embodiment of the present disclosure further provides a method for determining a channel parameter, applied to the above system, including:
Step S1: a data sending end determines a target sending power of a monitoring bandwidth.

For example, determining, by the data sending end, the target sending power of the monitoring bandwidth includes:
monitoring, by the data sending end, a message of an OBSS based on a monitoring channel;
acquiring, by the data sending end, a bandwidth and receiving power corresponding to the message based on the message; and
performing calculation, by the data sending end, based on the receiving power to obtain the target sending power of the monitoring bandwidth.

In the embodiment of the present disclosure, when the data sending end uses the spatial reuse technology, during a backoff process of the data sending end, upon monitoring the message from the OBSS, the data sending end records the bandwidth and the receiving power of a channel corresponding to the message.

Further, acquiring, by the data sending end, the bandwidth and the receiving power corresponding to the message based on the message includes:
the bandwidth corresponding to the message is greater than or equal to the monitoring bandwidth corresponding to the monitoring channel.
The monitoring bandwidth corresponding to the monitoring channel is 20 MHz;
For example: 1) when the data sending end monitors a message of an OBSS with a bandwidth of 20 MHz based on a monitoring channel with a monitoring bandwidth of 20 MHz, the data sending end also needs to monitor the message of the OBSS with the bandwidth of 20 MHz, so as to obtain an effective target receiving power, that is, the maximum receiving power. For example, the data sending end monitors the message of the OBSS with the bandwidth of 20 MHz, or the data sending end monitors a message of an OBSS with a bandwidth of 40 MHz (only monitoring a part of the bandwidth of 40 MHz), and the like;
2) when the data sending end monitors the message of the OBSS with the bandwidth of 40 MHz based on the monitoring channel with the monitoring bandwidth of 20 MHz, the data sending end also needs to monitor the message of the OBSS with the bandwidth of 40 MHz. For example, the data sending end may respectively record monitored two messages of the OBSS with the bandwidth of 40 MHz to obtain receiving powers respectively corresponding to the two messages, and performs calculation according to the two receiving powers to obtain the target receiving power of the channel with the bandwidth of 40 MHz;
3) when the data sending end monitors a message of an OBSS with a bandwidth of 80 MHz based on the monitoring channel with the monitoring bandwidth of 20 MHz, the data sending end also needs to monitor the message of the OBSS with the bandwidth of 80 MHz. For example, the data sending end may respectively record monitored four messages of the OBSS with the bandwidth of 20 MHz to obtain receiving powers respectively corresponding to the four messages, and performs calculation according to the four receiving powers to obtain the target receiving power of the channel with the bandwidth of 80 MHz; and
by analogy, it is possible to effectively monitor messages of OBSSs of high bandwidths, such as 160 MHz, based on the monitoring channel with the monitoring bandwidth of 20 MHz.

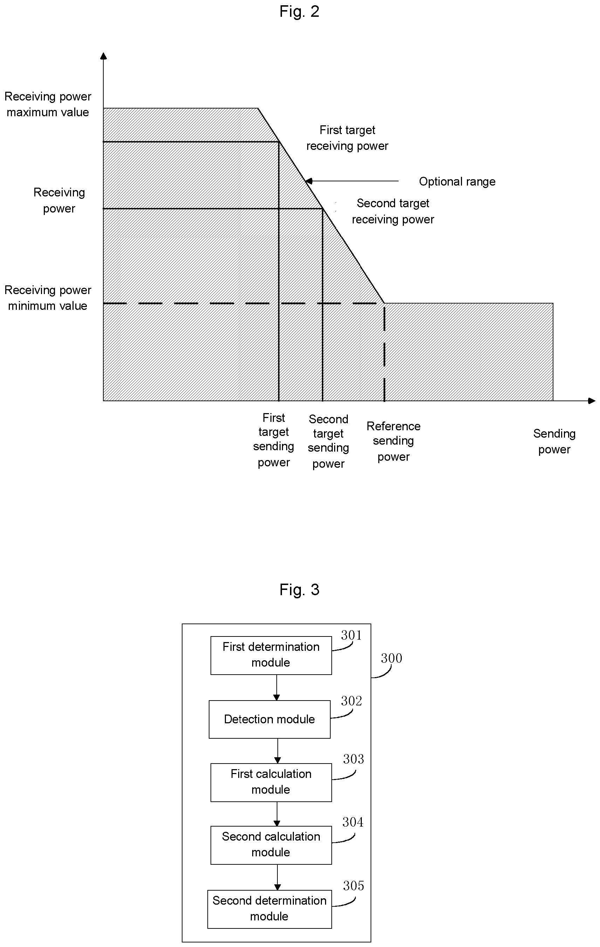

Further, after the target receiving power of the monitoring channel is obtained by calculation, the target sending power corresponding to the target receiving power is obtained according to Fig. 2, so as to obtain the target sending power of the monitoring channel.
A vertical ordinate in Fig. 2 represents the receiving power of the message of the OBSS, and an abscissa represents the sending power of the monitoring bandwidth;
the receiving power of the measured message in the embodiment of the present disclosure is within the range from the minimum receiving power to the maximum receiving power in Fig. 2, and based on the receiving power of the measured message of the OBSS, a corresponding selection is performed within an optional range of a shadow region to obtain a unique sending power of one monitoring bandwidth;
for example, when the maximum receiving power of the measured message is a first target receiving power, a corresponding first target sending power may be obtained according to Fig. 2; and
when the maximum receiving power of the measured message is a second target receiving power, a corresponding second target sending power may be obtained according to Fig. 2.

By analogy, after the maximum receiving power of the message of any OBSS is monitored, the target sending power of the corresponding monitoring bandwidth may be obtained based on the above steps, thereby facilitating the invocation of a subsequent algorithm.

In the embodiment of the present disclosure, spatial reuse under other high bandwidths in addition to the spatial reuse under a main channel 20 MHz may be implemented, thereby expanding the application range of spatial reuse.

Step S2: the data sending end detects state information of a data receiving end, and then the data sending end determines bandwidths to be selected matching the data receiving end, and obtains a target SNR of each bandwidth to be selected.

For example, detecting, by the data sending end, the state information of the data receiving end, and then determining, by the data sending end, the bandwidths to be selected matching the data receiving end, and obtaining the target SNR of each bandwidth to be selected includes:
acquiring, by the data sending end, the length of the message, and comparing the length with a length threshold;
when the length is greater than the length threshold, sending, by the data sending end, a CSI detection request to the data receiving end;
sending, by the data sending end, a sounding frame to the data receiving end;
determining, by the data receiving end, the matched bandwidths to be selected and obtaining an initial SNR of each bandwidth to be selected based on the sounding frame and the target sending power of each bandwidth to be selected;
receiving, by the data sending end, the bandwidths to be selected matching the data receiving end and the initial SNR of each bandwidth to be selected, which are fed back by the data receiving end; and
performing calculation, by the data sending end, based on the initial SNR to obtain the target SNR.

In the embodiment of the present disclosure, the length threshold of the message is preset, wherein the length threshold may be adjusted in real time based on different devices or different requirements, which is not limited in the embodiment of the present disclosure.

If the length of the message is greater than the length threshold, the data sending end sends a CSI detection request to the data receiving end, then the data sending end determines the bandwidths to be selected matching the data receiving end, and sends a sounding PPDU to the data receiving end, wherein the sounding PPDU includes preamble information, a long-short training sequence, a sub-carrier actual sending power, a sub-carrier actual receiving power and parameters of a RXVECTOR, which are negotiated by the data sending and the data receiving end; and the data receiving end performs CSI calculation based on the preamble information, the long-short training sequence, the sub-carrier actual sending power, the sub-carrier actual receiving power and the parameters of the RXVECTOR which are negotiated by the data sending and the data receiving end, and generates a CSI report, and then the data receiving end sends a CSI action frame to the data sending end, and sends the CSI report to the data sending end.

The CSI report includes the initial SNR, which is shown in Table 1:

**Table 1. Partial CSI reports of N channels with the bandwidth of 20 MHz**

| Name | The number of byte |
|---|---|
| Target SNR of first channel | 8 |
| ...... | ...... |
| Target SNR of Nth channel | 8 |

In the embodiment of the present disclosure, after obtaining the CSI report, the data sending end may obtain the types of the bandwidths to be selected matching the data receiving end, and the environmental information of the data receiving end, such as the initial SNR of each bandwidth to be selected.

Further, performing calculation, by the data sending end, based on the initial SNR to obtain the target SNR includes:
when the monitoring bandwidth of the monitoring channel is a first-type bandwidth, determining the initial SNR as the target SNR of each bandwidth to be selected; and
when the monitoring bandwidth of the monitoring channel is a second-type bandwidth, performing calculation based on the initial SNR, the target sending power of the first-type bandwidth and the target sending power of the monitoring channel, so as to obtain the target SNR of each bandwidth to be selected.

In the embodiment of the present disclosure, for different types of bandwidths to be selected, values corresponding to the target SNRs thereof are also different;
wherein the first-type bandwidth includes 20 MHz; and
the second-type bandwidth includes bandwidths greater than 20 MHz, for example, 40 MHz, 80 MHz, etc.

In an actual application scenario, when the monitoring bandwidth of the monitoring channel is 20 MHz, after receiving the CSI report, the data sending end directly acquires the initial SNR, and determines the initial SNR as the target SNR, thereby facilitating the invocation of the subsequent algorithm;
when the monitoring bandwidth of the monitoring channel is a monitoring bandwidth greater than 20 MHz, for example, 40 MHz, 80 MHz, and the like, after obtaining the initial SNR, the data sending end performs calculation based on the following calculation formula to obtain the target SNR;
for example, when the monitoring bandwidth of the monitoring channel is 40 MHz, the target SNR = the initial SNR + (the target sending power corresponding to 40 MHz - the target sending power corresponding to 20 MHz); and
when the monitoring bandwidth of the monitoring channel is 80 MHz, the target SNR = the initial SNR + (the target sending power corresponding to 80 MHz - the target sending power corresponding to 20 MHz).

By analogy, the target SNRs of other bandwidths to be selected may be obtained by calculation.

In the embodiment of the present disclosure, when the monitoring bandwidth of the monitoring channel is greater than 20 MHz, the target SNR is obtained by calculation in combination with the initial SNR, the target sending power of the monitoring bandwidth and the target sending power corresponding to 20 MHz, so as to improve the accuracy of the target SNR used by the subsequent algorithm.
Step S3: the data sending end performs calculation based on the target SNR to obtain a reference MCS set of each bandwidth to be selected;
For example, performing calculation, by the data sending end, based on the target SNR to obtain the reference MCS set of each bandwidth to be selected includes:
   performing calculation, by the data sending end, based on the target SNR to obtain an MCS threshold of each bandwidth to be selected; and
   screening a plurality of MCSs corresponding to each bandwidth to be selected based on the MCS threshold based on the MCS threshold, so as to obtain the reference MCS set of each bandwidth to be selected.

After obtaining the target SNR of each bandwidth to be selected, the data sending end may query Table 2 to obtain the MCS threshold of each bandwidth to be selected, that is, the highest sendable MCS.

After obtaining the MCS threshold of each bandwidth to be selected, the data sending end may query Table 2 to obtain the reference MCS set corresponding to each bandwidth to be selected.

**Table 2 Correspondence table of target SNRs of a plurality of bandwidths to be selected and the reference MCS set**

| Modulation | *SNR_{20MHz}* | *SNR_{40MHz}* | *SNR_{80MHz}* | *SNR_{160MHZ}* |
|---|---|---|---|---|
| MCS 0 | 2 dB | 5 dB | 8 dB | 11 dB |
| MCS 1 | 5 dB | 8 dB | 11 dB | 14 dB |
| MCS 2 | 9 dB | 12 dB | 15 dB | 18 dB |
| MCS 3 | 11 dB | 14 dB | 17 dB | 21 dB |
| MCS 4 | 15 dB | 18 dB | 21 dB | 24 dB |
| MCS 5 | 18 dB | 21 dB | 24 dB | 27 dB |
| MCS 6 | 20 dB | 23 dB | 26 dB | 29 dB |
| MCS 7 | 25 dB | 28 dB | 31 dB | 34 dB |
| MCS 8 | 29 dB | 32 dB | 35 dB | 38 dB |
| MCS 9 | 31 dB | 34 dB | 37 dB | 40 dB |

In the embodiment of the present disclosure, it is assumed that the bandwidths to be selected supported by the data receiving end may include 20 MHz, 40 MHz, 80 MHz and 160 MHz.

For example: 1) when the bandwidth to be selected is 20 MHz, the target SNR = 15 dB, and it can be seen from Table 2 that the MCS threshold is 15 dB, therefore the reference MCS set is MCS 4, MCS 3, MCS 2, MCS 1 and MCS 0.

That is, the following three-dimensional arrays may be obtained:
(20 MHz, MCS 4, packet loss rate), (20 MHz, MCS 3, packet loss rate), (20 MHz, MCS 2, packet loss rate), (20 MHz, MCS 1, packet loss rate), and (20 MHz, MCS 0, packet loss rate).
2) When the bandwidth to be selected is 20 MHz, the target SNR = 13 dB, and it can be seen from Table 2 that the MCS threshold is 12 dB, therefore the reference MCS set is MCS 2, MCS 1 and MCS 0.

That is, the following three-dimensional arrays may be obtained:
(40 MHz, MCS 2, packet loss rate), (40 MHz, MCS 1, packet loss rate), and (40 MHz, MCS 0, packet loss rate);
by analogy, the three-dimensional array corresponding to each bandwidth to be selected may be obtained.
Step S4: the data sending end performs calculation based on the reference MCS set to obtain a target throughput of each bandwidth to be selected.

For example, performing calculation, by the data sending end, based on the reference MCS set to obtain the target throughput of each bandwidth to be selected includes:
the data sending end obtaining a plurality of arrays based on the reference MCS set of each bandwidth to be selected and a maintenance parameter, wherein each array includes the bandwidth to be selected, a reference MCS and the number of spatial streams;
performing calculation, by the data sending end, based on each array to obtain a rate to be selected;
performing calculation, by the data sending end, based on each rate to be selected to obtain a throughput to be selected; and
screening, by the data sending end, a plurality of throughputs to be selected of each bandwidth to be selected, so as to determine the target throughput of each bandwidth to be selected.

In the embodiment of the present disclosure, the rate to be selected may be obtained by searching a table based on the corresponding bandwidth to be selected, the reference MCS and the number of spatial streams, wherein the table may be obtained based on the content disclosed in 802. 11AX, and thus details are not repeated in the embodiment of the present disclosure.

It should be noted that the number of spatial streams may be determined or adjusted according to actual situations, which is not specifically limited in the embodiment of the present disclosure.

Further, performing calculation, by the data sending end, based on each rate to be selected to obtain the throughput to be selected includes:
acquiring, by the data sending end, a packet loss rate of each bandwidth to be selected; and
performing calculation, by the data sending end, based on each rate to be selected and the packet loss rate to obtain the throughput to be selected.

In the embodiment of the present disclosure, the throughput to be selected may be obtained by calculation based on the following calculation formula:
the throughput to be selected = the rate to be selected * (1 - the packet loss rate),
wherein in the embodiment of the present disclosure, the packet loss rate may be obtained as follows: performing data transmission based on the bandwidth to be selected and a channel configured by the corresponding reference MCS, and then performing calculation to obtain the packet loss rate. For example, four packets are sent, but acknowledgment information of only two packets is received, it indicates that four packets are sent, but the acknowledgment information of only two packets is received, therefore the calculated packet loss rate is (4-2)/4 = 50%.

Based on the above formula, the throughput to be selected corresponding to each rate to be selected may be obtained by calculation;
taking two bandwidths to be selected of 20 MHz and 40 MHz matching the data receiving end as an example, (20 MHz, MCS 4, packet loss rate), (20 MHz, MCS 3, packet loss rate), (20 MHz, MCS 2, packet loss rate), (20 MHz, MCS 1, packet loss rate), and (20 MHz, MCS 0, packet loss rate) may be obtained;
(40 MHz, MCS 2, packet loss rate), (40 MHz, MCS 1, packet loss rate), and (40 MHz, MCS 0, packet loss rate) are also obtained;
that is, correspondingly, when the bandwidth to be selected is 20 MHz, five throughputs to be selected may be obtained, and it is assumed that the value of the throughput to be selected corresponding to the third three-dimensional array is the maximum, that is, (20 MHz, MCS 2, packet loss rate), then the throughput to be selected is determined as the target throughput when the bandwidth to be selected is 20 MHz; and
when the bandwidth to be selected is 40 MHz, three throughputs to be selected are obtained, and it is assumed that the value of the throughput to be selected corresponding to the second three-dimensional array is the maximum, that is, (40 MHz, MCS 1, packet loss rate), then the throughput to be selected is determined as the target throughput when the bandwidth to be selected is 40 MHz.
Step S5: the data sending end determines a working throughput based on the target throughput of each bandwidth to be selected, and determines a working bandwidth and a working rate based on the working throughput.

For example, determining, by the data sending end, the working throughput based on the target throughput of each bandwidth to be selected, and determining the working bandwidth based on the working throughput includes:
acquiring, by the data sending end, the target throughput of each bandwidth to be selected;
screening, by the data sending end, a plurality of target throughputs to determine the working throughput;
respectively determining, by the data sending end, the bandwidth to be selected, the rate to be selected, the reference MCS and the packet loss rate corresponding to the working throughput as the working bandwidth, the working rate, a working MCS and a working packet loss rate; and
determining, by the data sending end, a working channel for data transmission based on the working bandwidth, the working rate, the working MCS and the working packet loss rate.

In the embodiment of the present disclosure, the target throughput corresponding to (40 MHz, MCS 1, packet loss rate) is compared with the target throughput corresponding to (20 MHz, MCS 2, packet loss rate), if the target throughput corresponding to (20 MHz, MCS 2, packet loss rate) is greater than the target throughput corresponding to (40 MHz, MCS 1, packet loss rate), then (20 MHz, MCS 2, packet loss rate) is used as a working parameter, that is, the working bandwidth is 20 MHz, and the working MCS is MCS 2, and the packet loss rate corresponding to the three-dimensional array is the working packet loss rate; and the rate to be selected corresponding to the three-dimensional array is the working rate; and
then, a channel configured based on the obtained working bandwidth, the working rate, the working packet loss rate and the working MCS is the working channel.

By analogy, when the data receiving end supports a plurality of bandwidths, the working bandwidth and the working rate may also be obtained based on the above method, so as to obtain the working channel for data transmission.

In the embodiment of the present disclosure, based on mechanisms such as CSI detection and CSI reporting, the data sending end may more accurately find, on the basis of the target SNR, an optimal MCS supported by the data receiving end on the bandwidth, thereby avoiding the defect of it being necessary to resend data due to the fact that the MCS is limited; and it is also possible to judge to use which bandwidth as the working bandwidth to obtain the maximum throughput, and then the working channel is configured based on the working bandwidth and the corresponding working rate, thereby finally improving the efficiency of data transmission.

In one optional embodiment of the present disclosure, when the length of the message of the OBSS is less than or equal to the length threshold, it indicates that the data sending end cannot receive a CSI report fed back by the data receiving end; or
after sending the CSI detection request to the data receiving end, the data sending end cannot receive the CSI detection request fed back by the data receiving end, which indicates that the data sending end cannot subsequently receive the CSI report fed back by the receiving end; and
in an actual application scenario, if any of the above cases occurs, the data sending end obtains a locally pre-maintained three-dimensional array of (bandwidth, MCS, packet loss rate) to obtain the working parameter corresponding to the working throughput.

For example, the target throughput corresponding to each bandwidth to be selected is obtained by calculation based on the throughput to be selected = the rate to be selected * (1 - the packet loss rate);
the rate may be obtained by querying the table involved in the above embodiments, for example, a corresponding rate to be selected is searched based on the bandwidth, the MCS and the number of spatial streams; and then, based on the above formula, a corresponding throughput to be selected is obtained by calculation, a plurality of throughputs to be selected corresponding to each bandwidth to be selected are screened, and the throughputs to be selected with the maximum value are determined as the target throughputs of each bandwidth to be selected;
then, the target throughputs of each bandwidth to be selected are screened, the target throughput with the maximum value is determined as the working throughput, and then the working rate, the working packet loss rate and the working MCS are determined; and
a channel is configured based on the working throughput, the working rate, the working packet loss rate and the working MCS, so as to obtain the working channel.

In addition, in the embodiment of the present disclosure, after the working bandwidth is determined, it is still necessary to determine a constraint following the target sending power of the working bandwidth, and to perform data transmission under the constraint condition.

As shown in Fig. 3, an embodiment of the present disclosure further provides an apparatus 300 for determining a channel parameter, including:
a first determination module 301, configured to determine, by a data sending end, a target sending power of a monitoring bandwidth;
a detection module 302, configured to detect, by the data sending end, state information of a data receiving end, and then determine, by the data sending end, bandwidths to be selected matching the data receiving end, and obtain a target SNR of each bandwidth to be selected;
a first calculation module 303, configured to perform, by the data sending end, calculation based on the target SNR to obtain a reference MCS set of each bandwidth to be selected;
a second calculation module 304, configured to perform calculation, by the data sending end, based on the reference MCS set to obtain a target throughput of each bandwidth to be selected; and
a second determination module 305, configured to determine, by the data sending end, a working throughput based on the target throughput of each bandwidth to be selected, and determine a working bandwidth and a working rate based on the working throughput.

As at least alternative embodiment, determining the target sending power of the monitoring bandwidth based on the data sending end includes:
monitoring, by the data sending end, a message of an OBSS based on a monitoring channel;
acquiring, by the data sending end, a bandwidth and a receiving power corresponding to the message based on the message; and
performing calculation, by the data sending end, based on the receiving power to obtain the target sending power of the monitoring bandwidth.

As at least alternative embodiment, acquiring, by the data sending end, the bandwidth and the receiving power corresponding to the message based on the message includes:
the bandwidth corresponding to the message is greater than or equal to the monitoring bandwidth corresponding to the monitoring channel.

As at least alternative embodiment, detecting, by the data sending end, the state information of the data receiving end, and then determining, by the data sending end, the bandwidths to be selected matching the data receiving end, and obtaining the target SNR of each bandwidth to be selected includes:
acquiring, by the data sending end, the length of the message, and comparing the length with a length threshold;
when the length is greater than the length threshold, sending, by the data sending end, a CSI detection request to the data receiving end;
sending, by the data sending end, a sounding frame to the data receiving end;
determining, by the data receiving end, the matched bandwidths to be selected and obtaining an initial SNR of each bandwidth to be selected based on the sounding frame and the target sending power of each bandwidth to be selected;
receiving, by the data sending end, the bandwidths to be selected matching the data receiving end and the initial SNR of each bandwidth to be selected, which are fed back by the data receiving end; and
performing calculation, by the data sending end, based on the initial SNR to obtain the target SNR.

As at least alternative embodiment, performing calculation, by the data sending end, based on the initial SNR to obtain the target SNR includes:
when the monitoring bandwidth of the monitoring channel is a first-type bandwidth, determining the initial SNR as the target SNR of each bandwidth to be selected; and
when the monitoring bandwidth of the monitoring channel is a second-type bandwidth, performing calculation based on the initial SNR, the target sending power of the first-type bandwidth and the target sending power of the monitoring channel, so as to obtain the target SNR of each bandwidth to be selected.

As at least alternative embodiment, performing calculation, by the data sending end, based on the target SNR to obtain the reference MCS set of each bandwidth to be selected includes:
performing calculation, by the data sending end, based on the target SNR to obtain an MCS threshold of each bandwidth to be selected; and
screening a plurality of MCSs corresponding to each bandwidth to be selected based on the MCS threshold, so as to obtain the reference MCS set of each bandwidth to be selected.

As at least alternative embodiment, performing calculation, by the data sending end, based on the reference MCS set to obtain the target throughput of each bandwidth to be selected includes:
the data sending end obtaining a plurality of arrays based on the reference MCS set of each bandwidth to be selected and a maintenance parameter, wherein each array includes the bandwidth to be selected, a reference MCS and the number of spatial streams;
performing calculation, by the data sending end, based on each array to obtain a rate to be selected;
performing calculation, by the data sending end, based on each rate to be selected to obtain a throughput to be selected; and
screening, by the data sending end, a plurality of throughputs to be selected of each bandwidth to be selected, so as to determine the target throughput of each bandwidth to be selected.

As at least alternative embodiment, performing calculation, by the data sending end, based on each rate to be selected to obtain the throughput to be selected includes:
acquiring, by the data sending end, a packet loss rate of each bandwidth to be selected; and
performing calculation, by the data sending end, based on each rate to be selected and the packet loss rate to obtain the throughput to be selected.

As at least alternative embodiment, determining, by the data sending end, the working throughput based on the target throughput of each bandwidth to be selected, and determining the working bandwidth based on the working throughput includes:
acquiring, by the data sending end, the target throughput of each bandwidth to be selected;
screening, by the data sending end, a plurality of target throughputs to determine the working throughput;
respectively determining, by the data sending end, the bandwidth to be selected, the rate to be selected, the reference MCS and the packet loss rate corresponding to the working throughput as the working bandwidth, the working rate, a working MCS and a working packet loss rate; and
determining, by the data sending end, a working channel for data transmission based on the working bandwidth, the working rate, the working MCS and the working packet loss rate.

An embodiment of the present disclosure further provides a computer-readable storage medium, including a computer program stored therein, wherein the computer program, when running, controls a device where the computer-readable storage medium is located to execute the above method.

In addition, other components and functions of the apparatus in the embodiment of the present disclosure are known to those skilled in the art, and thus are not described herein again to reduce redundancy.

It should be noted that logic and/or steps expressed in the flowchart or described herein in other manners, for example, which may be considered as a fixed sequence table of executable instructions for implementing logical functions, may be specifically implemented in any computer-readable medium for use by or in combination with instruction execution systems, apparatuses or devices (for example, a computer-based system, a system including a processor, or other systems capable of obtaining instructions from the instruction execution systems, apparatuses or devices and executing the instructions). Regarding the present specification, the "computer-readable medium" may be any apparatus that may include, store, communicate, propagate, or transmit programs for use by or in combination with the instruction execution systems, apparatuses or devices. More specific examples of the computer-readable medium (a non-exhaustive list) include the following: an electrical connection portion (an electronic device) having one or more wires, a portable computer cartridge (a magnetic apparatus), a random access memory (RAM), a read-only memory (ROM), an erasable programmable read-only memory (EPROM or a flash memory), an optical fiber apparatus, and a portable compact disc read-only memory (CDROM). In addition, the computer-readable medium may even be paper or other suitable medium on which the program may be printed, this is because optical scanning may be performed by means of, for example, the paper or the other media, then editing, interpretation, or processing in other suitable ways as necessary is performed to obtain the program in an electronic manner, and then the program then stored in a computer memory.

It should be understood that each part of the present disclosure may be implemented by hardware, software, firmware, or a combination thereof. In the above implementations, a plurality of steps or methods may be implemented by software or firmware that is stored in the memory and is executed by a suitable instruction execution system. For example, if implemented by hardware, as in another implementation, the steps or methods may be implemented by any of the following techniques known in the prior art, or a combination thereof: a discrete logic circuit having a logic gate circuit for implementing a logic function on a data signal, an application-specific integrated circuits having a suitable combined logic gate circuit, a programmable gate array (PGA), a field-programmable gate arrays (FPGA), etc.

In the description of the present specification, description with reference to the terms "one embodiment", "some embodiments", "examples", "specific examples", or "some examples" is intended to indicate that specific features, structures, materials, or characteristics described in combination with the embodiment or example are included in at least one embodiment or example of the present disclosure. In the present specification, schematic representations of the above terms do not necessarily refer to the same embodiment or example. Furthermore, the described specific features, structures, materials, or characteristics may be combined in any suitable manner in one or more embodiments or examples.

In the description of the present disclosure, it should be understood that orientation or position relationships indicated by the terms "center", "longitudinal", "transverse", "length", "width", "thickness", "upper", "lower", "front", "back", "left", "right", "vertical", "horizontal", "top", "bottom", "inside", "outside", "clockwise", "counterclockwise", "axial", "radial", "circumferential" and the like are generally orientation or position relationships shown on the basis of the drawings, and are merely for the convenience of describing the present disclosure and simplifying the description, but do not indicate or imply that the referred apparatuses or elements must have specific orientations or must be constructed and operated in specific orientations, and thus cannot be construed as limitations to the present disclosure.

In addition, the terms "first", "second" and the like are only used for descriptive purposes only and cannot be understood as indicating or implying relative importance or implicitly indicating the number of indicated technical features. Therefore, features defined with "first" and "second" may explicitly or implicitly include at least one of the features. In the description of the present disclosure, "a plurality of" means at least two, for example, two, three, or the like, unless specifically defined otherwise.

In the present disclosure, unless otherwise expressly specified and limited, the terms "installed", "connected", "connection", "fixed" and the like should be understood in a broad sense. For example, the connection may be a fixed connection, and may also be a detachable connection, or an integral connection; may be a mechanical connection, and may also be an electrical connection; and may be a direct connection, may be an indirect connection through an intermediate medium, and may also be internal communication between two elements or an interaction relationship between the two elements, unless expressly limited otherwise. For those ordinary skilled in the art, the specific meanings of the above terms in the present disclosure may be understood in specific situations.

In the present disclosure, unless otherwise specified and limited, a first feature being "on" or "under" a second feature may be that the first feature is in direct contact with the second feature, or the first feature is in contact with the second feature through an intermediate medium. Moreover, the first feature being "over", "above" and "on" the second feature may be that the first feature is directly above or obliquely above the second feature, or merely indicates that a horizontal height of the first feature is greater than that of the second feature. The first feature being "under", "below" and "beneath" the second feature may be that the first feature is directly below or obliquely below the second feature, or merely indicates that the horizontal height of the first feature is less than that of the second feature.

Although the embodiments of the present disclosure have been shown and described above, it can be understood that the above embodiments are exemplary and cannot be understood as limitations to the present disclosure, and those ordinary skilled in the art may make changes, modifications, substitutions and variations to the above embodiments within the scope of the present disclosure.

## Claims

1. A method for determining a channel parameter, comprising:
determining, by a data sending end, a target sending power of a monitoring bandwidth;
detecting, by the data sending end, state information of a data receiving end, and then determining, by the data sending end, bandwidths to be selected matching the data receiving end, and obtaining a target SNR of each bandwidth to be selected;
performing calculation, by the data sending end, based on the target SNR to obtain a reference MCS set of each bandwidth to be selected;
performing calculation, by the data sending end, based on the reference MCS set to obtain a target throughput of each bandwidth to be selected; and
determining, by the data sending end, a working throughput based on the target throughput of each bandwidth to be selected, and determining a working bandwidth and a working rate based on the working throughput.

2. The method as claimed in claim 1, wherein determining, by the data sending end, the target sending power of the monitoring bandwidth comprises:
monitoring, by the data sending end, a message of an OBSS based on a monitoring channel;
acquiring, by the data sending end, a bandwidth and a receiving power corresponding to the message based on the message; and
performing calculation, by the data sending end, based on the receiving power to obtain the target sending power of the monitoring bandwidth.

3. The method as claimed in claim 2, wherein acquiring, by the data sending end, the bandwidth and the receiving power corresponding to the message based on the message comprises:
the bandwidth corresponding to the message is greater than or equal to the monitoring bandwidth corresponding to the monitoring channel.

4. The method as claimed in claim 2, wherein detecting, by the data sending end, the state information of the data receiving end, and then determining, by the data sending end, the bandwidths to be selected matching the data receiving end, and obtaining the target SNR of each bandwidth to be selected comprises:
acquiring, by the data sending end, a length of the message, and comparing the length with a length threshold;
when the length is greater than the length threshold, sending, by the data sending end, a CSI detection request to the data receiving end;
sending, by the data sending end, one sounding frame to the data receiving end;
determining, by the data receiving end, the matched bandwidths to be selected and obtaining an initial SNR of each bandwidth to be selected based on the sounding frame and the target sending power of each bandwidth to be selected;
receiving, by the data sending end, the bandwidths to be selected matching the data receiving end and the initial SNR of each bandwidth to be selected, which are fed back by the data receiving end; and
performing calculation, by the data sending end, based on the initial SNR to obtain the target SNR.

5. The method as claimed in claim 4, wherein performing calculation, by the data sending end, based on the initial SNR to obtain the target SNR comprises:
when the monitoring bandwidth of the monitoring channel is a first-type bandwidth, determining the initial SNR as the target SNR of each bandwidth to be selected; and
when the monitoring bandwidth of the monitoring channel is a second-type bandwidth, performing calculation based on the initial SNR, the target sending power of the first-type bandwidth and the target sending power of the monitoring channel, so as to obtain the target SNR of each bandwidth to be selected.

6. The method as claimed in claim 1, wherein performing calculation, by the data sending end, based on the target SNR to obtain the reference MCS set of each bandwidth to be selected comprises:
performing calculation, by the data sending end, based on the target SNR to obtain an MCS threshold of each bandwidth to be selected; and
screening a plurality of MCSs corresponding to each bandwidth to be selected based on the MCS threshold, so as to obtain the reference MCS set of each bandwidth to be selected.

7. The method as claimed in claim 1, wherein performing calculation, by the data sending end, based on the reference MCS set to obtain the target throughput of each bandwidth to be selected comprises:
obtaining, by the data sending end, a plurality of arrays based on the reference MCS set of each bandwidth to be selected and a maintenance parameter, wherein each array comprises the bandwidth to be selected, a reference MCS and the number of spatial streams;
performing calculation, by the data sending end, based on each array to obtain a rate to be selected;
performing calculation, by the data sending end, based on each rate to be selected to obtain a throughput to be selected; and
screening a plurality of throughputs to be selected of each bandwidth to be selected, so as to determine the target throughput of each bandwidth to be selected.

8. The method as claimed in claim 7, wherein performing calculation, by the data sending end, based on each rate to be selected to obtain the throughput to be selected comprises:
acquiring, by the data sending end, a packet loss rate of each bandwidth to be selected; and
performing calculation, by the data sending end, based on each rate to be selected and the packet loss rate to obtain the throughput to be selected.

9. The method as claimed in claim 1, wherein determining, by the data sending end, the working throughput based on the target throughput of each bandwidth to be selected, and determining the working bandwidth based on the working throughput comprises:
acquiring, by the data sending end, the target throughput of each bandwidth to be selected;
screening, by the data sending end, a plurality of target throughputs to determine the working throughput;
respectively determining, by the data sending end, the bandwidth to be selected, the rate to be selected, the reference MCS and the packet loss rate corresponding to the working throughput as the working bandwidth, the working rate, a working MCS and a working packet loss rate; and
determining, by the data sending end, a working channel for data transmission based on the working bandwidth, the working rate, the working MCS and the working packet loss rate.

10. An apparatus for determining a channel parameter, comprising:
a first determination module, configured to determine, by a data sending end, a target sending power of a monitoring bandwidth;
a detection module, configured to detect, by the data sending end, state information of a data receiving end, and then determine, by the data sending end, bandwidths to be selected matching the data receiving end, and obtain a target SNR of each bandwidth to be selected;
a first calculation module, configured to perform calculation, by the data sending end, based on the target SNR to obtain a reference MCS set of each bandwidth to be selected;
a second calculation module, configured to perform calculation, by the data sending end, based on the reference MCS set to obtain a target throughput of each bandwidth to be selected; and
a second determination module, configured to determine, by the data sending end, a working throughput based on the target throughput of each bandwidth to be selected, and determine a working bandwidth and a working rate based on the working throughput.

11. An electronic device, comprising a processor, a memory, and a computer program, stored in the memory and configured to be executed by the processor, wherein the processor, when executing the computer program, implements the method according to any of claims 1-9.

12. A computer-readable storage medium, comprising a computer program stored therein, wherein the computer program, when running, controls a device where the computer-readable storage medium is located to execute the method according to any of claims 1-9.
